Europäisches Patentamt

European Patent Office

Office européen des brevets

(19)

(11) Veröffentlichungsnummer: **0 026 948**
**B1**

(12) **EUROPÄISCHE PATENTSCHRIFT**

(45) Veröffentlichungstag der Patentschrift:
**27.04.83**

(51) Int. Cl.³: **C 09 C 1/36**

(21) Anmeldenummer: **80200868.0**

(22) Anmeldetag: **16.09.80**

(54) Verfahren zur Herstellung eines wetterbeständigen und/oder photostabilen Titandioxid-Rutil-Pigments.

(30) Priorität: **04.10.79 DE 2940222**

(43) Veröffentlichungstag der Anmeldung:
**15.04.81 Patentblatt 81/15**

(45) Bekanntmachung des Hinweises auf die Patenterteilung:
**27.04.83 Patentblatt 83/17**

(84) Benannte Vertragsstaaten:
**BE DE FR GB IT NL**

(56) Entgegenhaltungen:
**GB-A-500 012**
**US-A-2 231 455**
**US-A-2286 882**

*Die Akte enthält technische Angaben, die nach dem Eingang der Anmeldung eingereicht wurden und die nicht in dieser Patentschrift enthalten sind.*

(73) Patentinhaber: **METALLGESELLSCHAFT AG,**
**Reuterweg 14 Postfach 3724, D-6000 Frankfurt/M.1 (DE)**

(72) Erfinder: **Hupfeld, Jürgen, Dr., Brunnenweg 12a,**
**D-2308 Preetz (DE)**
Erfinder: **Dumke, Heinrich, Filter Strasse 111,**
**D-4130 Moers 1 (DE)**
Erfinder: **Valet, Gerhard, Dr., Baustrasse 20,**
**D-4130 Moers (DE)**

(74) Vertreter: **Fischer, Ernst, Dr., Reuterweg 14,**
**D-6000 Frankfurt am Main 1 (DE)**

ACTORUM AG

Verfahren zur Herstellung eines wetterbeständigen und/oder photostabilen Titandioxid-Rutil-Pigments

Die Erfindung betrifft ein Verfahren zur Herstellung eines wetterbeständigen und/oder photostabilen $TiO_2$-Rutil-Pigments.

Es ist bekannt, Titandioxid als Weisspigment in Anstrichfarben einzusetzen. Der Einfuss der Atmosphäre, insbesondere Lichteinwirkung und UV-Strahlung beeinträchtigen vor allem Aussenanstriche und bewirken als Folge nicht ausreichender Wetterbeständigkeit einen Kreidungseffekt. Nach bekannten Vorstellungen soll das dem Sonnenlicht ausgesetzte Titandioxid-Pigment atomaren Sauerstoff abspalten, der als Oxidationsmittel für das Bindemittel des Anstrichfilms wie Alkyd- oder Melaminharz, dient und dieses schliesslich zerstört. Die mangelnde Bindemittelwirkung macht sich dann als sogenannte Kreidung bemerkbar (US-A-2 671 031). Zur Klärung und zum besseren Verständnis dieser komplizierten Erscheinungen hat man auch schon Fehlordnungsvorstellungen wie bei Halbleitern zur Deutung herangezogen (Winnacker-Küchler, Bd. II, 1959, S. 576).

Es ist daher seit langem bekannt, die Photosensibilität von Titandioxid-Pigmenten durch den Einbau anderer Elemente in das Kristallgitter zu vermindern. Nach bekannten Vorschlägen soll der schädigende Einfluss von Titandioxid-Pigment dadurch aufgehoben werden, dass dem Titandioxidhydrat vor dem Glühen geringe Mengen höherwertiger Metalle wie Niob und/oder Tantal (DE-C-703 182), Wolfram, Molybdän, Antimon, Zink, seltene Erdmetalle oder Thorium zugesetzt werden (Winnacker-Küchler loc. cit.). Nach weiteren bekannten Vorschlägen hat man auch die fertig gebildeten Titandioxidpigment-Teilchen mit Oxiden oder Hydroxiden von Aluminium, Silicium, Zink, Chrom oder Zirkonium behandelt. Dabei soll keine vollkommene Umhüllung der einzelnen Pigmentteilchen und nur eine Absättigung der aktiven Zentren eintreten (Matthes/Wehner: Anorganischtechnische Verfahren, Leipzig 1964, S. 833). Nach dem aus DE-A-2 545 243 bekannten Verfahren zur Herstellung eines photochemisch stabilen $TiO_2$-Rutil-Pigments wid die Wetterbeständigkeit durch eine zweite Glühung mit aufgefällten Oxiden höherwertiger Metalle, z.B. Niob, verbessert. Als synergistischer Effekt wird dabei die Wirkung sogenannter Rekombinationszentren, das sind umladbare Ionen oder Redoxsysteme, ausgenutzt. Im vorbekannten Verfahren ist entscheidend, dass durch eine zweite Glühung mit definierter zeitlicher und thermischer Begrenzung eine partielle Eindiffusion der als Oxid ausgefällten Metallionen auftritt. Es entstehen inhomogene Dotierungen mit zum Korninneren abnehmenden Konzentrationen, die allmählich Halbleiterübergängen entsprechen. Das an sich «n-leitende» Grundmaterial wird durch Aluminium in Richtung niedriger und durch Niob in Richtung höherer Leitfähigkeit variiert. Den Konzentrationsprofilen entsprechend entstehen elektronische Diffusionspotentiale bzw. Verbiegungen der Halbleiterbänder, die Einzelkörner werden zu sphärischen Quasi-Photozellen. Die in solchen allmählichen Halbleiterübergängen durch Absorption von Lichtquanten hinreichender Energie entstehenden Ladungsträgerpaare werden getrennt und entsprechend ihrer Polarität im Kristall nach innen oder aussen, dem lokalen elektrischen Potential folgend, bewegt. Niob im Konzentrationsprofil erfüllt die Aufgabe, das primäre Oxidationsmittel «Defektelektronen» von der Oberfläche fernzuhalten. Aluminium im Konzentrationsprofil bewirkt eine Abschirmung der kristallinen Oberflächenbereiche gegen Elektronenzuwanderung.

Schliesslich ist aus DE-C-955 887 ein Verfahren zur Herstellung von Titandioxid-Pigmenten bekannt, worin das Titandioxidfällungsprodukt nach dem Kalzinieren abgeschreckt wird, wobei das kalzinierte Gut in eine sauer reagierende, gegebenenfalls ein Netzmittel enthaltende Flüssigkeit, eingetragen wird. Mit dem vorbekannten Verfahren wird neben verringerter Mahlarbeit der Farbton und das Färbevermögen des Pigments verbessert, welche beiden letzten Eigenschaften auf die Verringerung der Verunreinigungen zurückzuführen ist. Die Vorveröffentlichung gibt aber keinen Hinweis dafür, wie ein $TiO_2$-Rutil-Pigment erhöhter Photostabilität oder Wetterbeständigkeit in vorteilhafter Weise und zu beliebig wiederholten Malen gezielt nach einer bestimmten Methode geschaffen werden kann.

Die bekannten Verfahren haben daher zwar eine gewisse Verbesserung der Photostabilität von Titandioxid-Pigmenten bewirken können. Jedoch ist die Wirtschaftlichkeit und der erreichte Grad der Verbesserung noch nicht in allen Fällen ausreichend.

Der Erfindung liegt die Aufgabe zugrunde, in einem wirtschaftlicheren Verfahren die Wetterbeständigkeit und/oder Photostabilität von $TiO_2$-Rutil-Pigmenten gezielt zu verbessern.

Die Erfindung löst diese Aufgabe mit einem Verfahren zur Herstelung von Titandioxid-Pigmenten durch Ausfällen und gegebenenfalls Dotieren, Kalzinieren, Abschrecken und Vermahlen. Bei einem Verfahren der genannten Art besteht die Erfindung darin, dass zur Ausbildung eines photostabilen und/oder wetterbeständigen Titandioxid-Rutil-Pigments ein kalziniertes Titandioxid einer gezielten Temperierung in sauerstoffhaltiger Atmosphäre, vorzugsweise Luft, im Bereich von 250 bis 1000°C unterzogen und das temperierte Gut abgeschreckt wird.

In dem erfindungsgemässen Verfahren kann ein Titandioxid eingesetzt werden, das bereits eine übliche Kalzinierung erfahren hat, beispielsweise bei mindestens 750°C. Demzufolge eignet sich ein $TiO_2$-Pigment, das z.B. nach der üblichen Kalzinierung abgekühlt wurde. Zweckmässig wird jedoch die erfindungsgemässe Behandlung an die übliche Glühbehandlung direkt angeschlossen, so dass eine gesonderte Aufheizung des kalten Gutes vermieden wird. Das eingesetzte Titandioxid kann ferner auch durch in bekannter Weise im Kristallgitter eingebautes Zinkoxid oder Aluminiumoxid stabilisiert und homogen dotiert sein.

Die gezielte Temperierung wird im Temperaturbereich von 250 bis 1000°C in sauerstoffhaltiger Atmosphäre vorgenommen. Diese Atmosphäre ist im allgemeinen Luft, jedoch kann sie auch aus mit Sauerstoff enthaltendem bzw. mit diesem angereichertem Inertgas bestehen, wie auch aus mit Sauerstoff angereicherter Luft. Sofern es die apparativen Ausgestaltungen ermöglichen, kann die Temperierung nach dem erfindungsgemässen Verfahren auch bei erhöhtem Druck vorgenommen werden. Die Temperierung erfolgt in einem Zeitraum im allgemeinen von etwa 10 bis 60 Minuten. In einzelnen Fällen können diese Behandlungszeiten unterschritten wie auch überschritten werden, je nach apparativer Ausgestaltung des Verfahrens, wie auch in Abhängigkeit von der gewählten Schichtdicke des zu behandelnden Gutes. Während dieser Temperierung erfolgt eine Gleichgewichtseinstellung des $TiO_2$-Rutil-Kristalls auf den Sauerstoffpartialdruck der umgebenden Atmosphäre. Dabei führt diese besondere Situation zu einem Maximum des Sauerstoffgehaltes des $TiO_2$-Kristalls im Temperaturbereich mit «p-Leitung». Dies ist besonders deshalb bemerkenswert, weil üblicherweise Oxide mit steigender Temperatur im Sauerstoffgehalt absinken bzw. ihren Sauerstoffzersetzungsdruck erhöhen. Im Anschluss an die gezielte Temperierung in sauerstoffhaltiger Atmosphäre wird das temperierte Gut abgeschreckt. Zweckmässig wird die Abschreckung durch Eintragen des temperierten Gutes in Wasser vorgenommen. Hierbei sind Temperatur, pH-Wert des Wassers wie auch dessen Menge und Mitverwendung von Netzmitteln von untergeordneter Bedeutung. Selbstverständlich muss die Wassermenge jedoch für eine Dispergierung ausreichend sein.

Die Abschreckung kann auch mittels eines wasserhaltigen Luftstroms vorgenommen werden, welche Arbeitsweise sich gegenüber einer Abschreckung im trockenen Luftstrom empfiehlt.

Wie des weiteren gefunden wurde, ist die Gleichgewichtseinstellung des $TiO_2$-Rutil-Kristalls auf den umgebenden Sauerstoffpartialdruck im Bereich von 250 bis 1000°C unter Erzielung eines maximalen Sauerstoffgehalts im genannten Bereich möglich. Wie überraschend festgestellt wurde, können durch gezielte Temperierung in bestimmten Temperaturbereichen mit anschliessender Abschreckung die photochemischen Eigenschaften des $TiO_2$-Rutil-Kristalls im Sinne einer Verbesserung verändert und gesteuert werden. So durchläuft die Pigmenteigenschaft der Photostabilität mit steigender Temperierungs-Temperatur in sauerstoffhaltiger Atmosphäre (bzw. Abschrecktemperatur) im Bereich von etwa 250 bis 500°C ein schwaches Maximum bei etwa 300°C und führt, nach Durchlaufen eines Minimums bei etwa 500 bis 600°C, schliesslich zu einem deutlichen Maximum bei etwa 850°C im Bereich von etwa 750 bis 950°C.

Der Begriff Photostabilität wird als Kennzeichnung der Resistenz eines Pigments gegen Vergrauung durch Bestrahlung mit dem Licht einer Xenonbogenlampe benutzt. Die Photostabilität wird in Melaminharzpressschichten (Laminat) nach Bestrahlung als Differenz zum Ausgangswert des Hellbezugswertes A gemessen und beurteilt. Sie unterscheidet sich von der DIN 53 231 definierten Lichtechtheit durch fehlende Befeuchtung in der Prüfungskammer und durch die Art der Probekörperherstellung. Bezogen auf den am Pigment ablaufenden photochemischen Prozess entsprechen sich Photostabilität und Lichtechtheit im wesentlichen Inhalt der Aussage.

Die Pigmenteigenschaften der Wetterbeständigkeit durchläuft im Bereich der Temperierungs-Temperatur (bzw. Abschrecktemperatur) von mehr als etwa 500°C bis weniger als etwa 750°C ein deutliches breites Maximum bei etwa 700 bis 800°C. Eine Abschrecktemperatur von etwa 700°C hat sich als optimal bewiesen.

Die physikalisch-chemischen Vorgänge, die dem erfindungsgemässen Verfahren zugrundeliegen, sind zwar noch nicht in allen Einzelheiten geklärt, jedoch können die nachfolgenden Vorstellungen im wesentlichen als gesichert gelten.

Neben dem durch Abschrecken bewirkten Einfrieren des vorliegenden erhöhten Sauerstoffgehalts als Grundkörperstabilisierung (analog zur Dotierung mit ZnO oder $Al_2O_3$) ist wegen der langsameren aber zweifellos vorhandenen Sauerstoffaustauschreaktion, in oberflächennahen kristallinen Bereichen mit einer Profilbildung der Sauerstoffkonzentration im $TiO_2$-Kristall zu rechnen (Sauerstoffgradient), die ebenfalls einfriert. Gesamtkonzentration und Profil des Sauerstoffs werden bei vorgegebenem Partialdruck, z.B. Luft, von der Temperaturführung der Temperierung bzw. der Abschrecktemperatur bestimmt. In der Wirkung auf den Elektronenhaushalt des Rutils sind Dotierungen mit (gegenüber vierwertigem Titan) niederwertigen Metallionen einer Erhöhung des Sauerstoffgehalts im Gitter (Aufoxidation) äquivalent, während Dotierungen mit höherwertigen Metallionen einer Anreduktion entsprechen. Wie bereits erwähnt, wird elektronische Leitfähigkeit des «n-Leiters» im ersteren Fall (z.B. durch Zn, Al) erniedrigt, im letzteren (z.B. durch Nb) erhöht. Elektronische Messungen haben gezeigt, dass bei Raumtemperatur keine Inversion zur im Normalfall bei Halbleitern möglichen «p-Leitung» nachgewiesen werden kann. Im Temperaturbereich von 300°C bis 900°C ist jedoch nach Literatur und eigenen Messungen «p-Leitung» nachweisbar, die durch Sauerstoff auf Zwischengitterplatz mit energetisch extrem hoch gelegenem Akzeptorniveau erklärt werden kann.

Die verfeinerte Analyse elektronischer Einkristallmessungen hat nun gezeigt, dass diese besondere Situation zu einem Maximum des Sauerstoffgehalts im Temperaturbereich mit «p-Leitung» führt, wenn eine Gleichgewichtseinstellung mit dem gasförmigen Sauerstoff der Umgebung gewährleistet ist. Dies ist besonders deshalb bemerkenswert, weil im Normalfall Oxide mit steigender Temperatur im Sauerstoffgehalt absinken bzw. ihren Sauerstoffzersetzungsdruck erhöhen. Als ein solches Beispiel für normales Oxidverhalten kann Titandioxid in der Anatas-Modifikation gelten, das bei schnellem Abkühlen in Luft einen Blaustich erhält. Diese, dem Fachmann bekannte Erscheinung wird durch «Einfrieren» eines verminderten Sauerstoffgehalts hervorgerufen und entspricht der durch termisch erhöhten Zersetzungsdruck eingetretenen Anreduktion. Demgegenüber macht das erfindungsgemässe Verfahren von einer bisher nicht bekannten thermodynamischen Anomalie Gebrauch.

Zusammenfassend ergibt sich folgende Deutung für eine Änderung der Gesamtkonzentration und/ oder der Verteilung des kristallin gebundenen Sauerstoffs im Vergleich zum üblichen langsamen Abkühlungsvorgang:

In ihrer Wirkung auf den Elektronenhaushalt des $TiO_2$-Rutil-Kristalls

1) entsprechen sich die Konzentrationsprofile von niederwertigen Metallionen — z.B. ein durch zweite Glühung von auf $TiO_2$ aufgefälltem $Al_2O_3$ erhaltener Aluminiumgradient — und Sauerstoff,

2) verhalten sich die Konzentrationsprofile von höherwertigen Metallionen — z.B. ein durch zweite Glühung von auf $TiO_2$ aufgefälltem $Nb_2O_5$ erhaltener Niobgradient — gegenläufig zum Konzentrationsprofil des Sauerstoffs.

Zur Verbesserung der Wetterbeständigkeit ist deshalb eine Kombination aus hohem Sauerstoff-Gesamtgehalt mit von innen nach aussen im $TiO_2$-Kristall abfallendem Konzentrationsprofil anzustreben. Zur Verbesserung der Photostabilität hingegen ist eine Kombination aus hohem Sauerstoff-Gesamtgehalt mit von innen nach aussen im $TiO_2$-Kristall ansteigendem Konzentrationsprofil günstig.

Die mit der Erfindung erzielten Vorteile sind darin zu sehen, dass mit dem erfindungsgemässen Verfahren ein ebenso einfaches wie wirtschaftliches Verfahren zu einer Herstellung von $TiO_2$-Rutil-Pigmenten mit in gezielter Weise verbesserter Wetterbeständigkeit und/oder Photostabilität geschaffen ist. Bei in der Wetterbeständigkeit verbesserten $TiO_2$-Rutil-Pigmenten werden die Glanzwerte und die Kreidungsbewertungen bei einem zeitlichen Schnitt in der Phase der stärksten Schicht-Degradation gegenüber nicht abgeschreckten Vergleichsproben ca. um den Faktor 2 verbessert. Die Pulverhelligkeit fällt geringfügig mit steigender Temperatur ab (beginnende Anreduktion). Gegenüber Vergleichsproben wird die Verbesserung der Wetterbeständigkeit ohne pigmentoptische Einbussen erzielt.

Die Verbesserung der Fotostabilität führt zu hervorragenden $TiO_2$-Rutil-Pigmenten, die im Stand der Technik nur durch eine 2. Glühung von z.B. mit Aluminiumoxid behandelten $TiO_2$-Rutil-Pigmenten (Al-Konzentrationsprofil) hergestellt werden können. Gegenüber nicht abgeschreckten Vergleichsproben sind geringfügige pigmentoptische Einbussen zu erkennen («eingefrorene» partielle Anreduktion), denen aber durch geeignete Massnahmen vor und nach der Kalzination kompensierend entgegengewirkt werden kann. Im Gesamtergebnis werden Laminatpigmente hergestellt, die gegenüber Standard-Typen ohne pigmentoptische Nachteile eine Fotostabilität von Pigmenten der Spitzengruppe aufweisen.

Die Erfindung wird in den nachstehenden Beispielen näher und beispielhaft erläutert.

In den Beispielen wird von einem nach dem Sulfat-Verfahren gewonnenen Titandioxid in Form des Kühleraustrags (ausgenommen Beispiel 2a) ausgegangen. Als Kühleraustrag wird das nach der Kalzination abgekühlte Rohpigment in der Rutil-Modifikation bezeichnet, das gegebenenfalls mit ZnO oder $Al_2O_3$ stabilisiert sein kann.

*Beispiel 1*

750 g Kühleraustrag wurden in einer Quarzschale im Muffelofen bei Luftatmosphäre auf 750°C gebracht. Dabei wurde der Ofen auf ±5°C geregelt und die Messtemperatur davon unabhängig mit einem in das Glühgut eingeführten Mantelthermoelement im Gut ermittelt. Nach Erreichen und Aufrechterhalten der konstanten Mess- bzw. Glühtemperatur (nach ca. 30 Minuten) wurde der Inhalt der Quarzschale in ein Gefäss mit vorgelegtem Wasser abrupt entleert. Die Wassermenge wurde so gewählt, dass sich für die anzuschliessende Nassmahlung ein $TiO_2$-Gehalt von ca. 450 g/l einstellte.

Die anschliessende Nachbehandlung mit anorganischen Mitteln erfolgte in einer Suspension mit ca. 300 g $TiO_2$/l bei 50°C unter intensivem Rühren, wobei durch Behandlung mit Titanylsulfat, Natriumsilikat und Natriumaluminat 1% $TiO_2$ und 1% $SiO_2$ sowie 4% $Al_2O_3$, jeweils auf den $TiO_2$-Gehalt der Suspension bezogen, aufgebracht wurden. Nach einer 2stündigen Reifezeit bei einem pH-Wert von 7,5 wurde die Probe filtriert, gewaschen, getrocknet und strahlgemahlen.

Im Vergleichsversuch wurde Kühleraustrag ohne die Behandlung des erfindungsgemässen Verfahrens sofort der Nassmahlung, Nachbehandlung (wie oben beschrieben), Trocknung und Mahlung unterworfen.

Die gemäss dem Verfahren der Erfindung erzielte verbesserte Wetterbeständigkeit des $TiO_2$-Pigments lässt sich gegenüber herkömmlich hergestelltem $TiO_2$-Pigment anhand folgender Tests zeigen:

a) Glanzverhalten

Zur Herstellung der Testprobe wird auf Aluminiumblech ein $TiO_2$-Pigment-haltiger Lackfilm aufgespritzt und an der Luft getrocknet [Alkylharz, Anreiben mittels Sandmühle (Perlmill), Zusatz von Heliogenblau, Pigment-Volumen-Konzentration (PVK) 15]. Die Probe wird einer Bewitterung im Weather-O-meter während 600 Stunden ausgesetzt. Das Glanzverhalten wird an dem Testblech bestimmt durch Messen der gerichteten Lichtreflexion unter einem Winkel von 20° bzw. 60° gegen eine hochglanzpolierte schwarze Glasplatte.

b) Kreidung

Ein wie unter (a) hergestelltes Testblech wird einer 600stündigen Bewitterung im Weather-O-meter ausgesetzt. An dem bewitterten Lackfilm werden Stempelabdrücke (Methode nach Kempf) hergestellt. Mittels dieser Stempelabdrücke werden die an der Oberfläche des Anstrichfilms durch die Bewitterung freigelegten Pigmentteilchen bestimmt und benotet.

| Probe | Ergebnis der Kurzbewitterung | | |
|---|---|---|---|
| | 20°-Glanz | 60°-Glanz | Kreidung |
| herkömmlich hergestelltes $TiO_2$ | 5 | 21 | 21,5 |
| erfindungsgemäss hergestelltes $TiO_2$ | 17 | 54 | 10,0 |

Die erfindungsgemäss hergestellte, abgeschreckte Probe zeigt gegenüber der in herkömmlicher Weise hergestellten, nicht abgeschreckten Probe eine signifikant bessere Glanzhaltung und Kreidungsbeständigkeit.

*Beispiel 2*

a) In einem Betriebsversuch wurden 50 t $TiO_2$ in einem Ofen bei etwa 860°C in Luftatmosphäre geglüht. Das temperierte Gut von etwa 860°C wurde kontinuierlich aus dem Ofen ausgetragen, in Wasser kontinuierlich eingetragen und abgeschreckt. Die Suspension mit dem abgeschreckten $TiO_2$ wurde einer Nassmahlung unterzogen und einer Nachbehandlung zugeführt. Hierbei wurde der $TiO_2$-Suspension eine saure Antimon-V-Chlorid-Lösung zugegeben und 1% $Sb_2O_5$, bezogen auf den $TiO_2$-Gehalt, auf dem Pigment aufgefällt. Durch Zusatz von Natriumsilikat wie auch Natriumaluminat wurden 1% $SiO_2$ und 2% $Al_2O_3$, jeweils auf $TiO_2$ bezogen, aufgefällt.
Nach der Nachbehandlung erfolgte wie üblich die Filtration, Waschung, Trocknung und Strahlmahlung des Versuchsgutes.

b) In einem Vergleichsversuch wurde der Ofenaustrag von etwa 860°C in üblicher Weise über einen Kühler gegeben und anschliessend der Nassmahlung, Nachbehandlung (wie oben beschrieben), Filtration, Waschung, Trocknung und Strahlmahlung zugeführt.
Die gemäss dem Verfahren der Erfindung erzielte verbesserte Fotostabilität des $TiO_2$-Pigments gegenüber herkömmlich hergestelltem $TiO_2$-Pigment lässt sich anhand des folgenden Tests zeigen, worin der Helligkeitsabfall eines Pigments nach einer Bestrahlung mit UV-Licht ermittelt wird. Dieser Test besteht in einer Remissionsmessung (Elrepho, FMY/C) an einem mit Melaminharz 2fach getränkten, 2fach vorkondensierten, auf weissem Untergrund verpressten Laminatpapier mit ca. 25% $TiO_2$. Die Differenz der Zahlenwerte vor und nach Belichtung (25, 50 und 100 h) mit UV-Licht (Xenotestgerät 450) ergibt den Wert für den Helligkeitsabfall.

| Probe | Helligkeitsabfall nach 100 h Bestrahlung mit UV-Licht |
|---|---|
| herkömmlich hergestelltes $TiO_2$ | 3,0 |
| erfindungsgemäss hergestelltes $TiO_2$ | 0,8 |

Das erfindungsgemäss hergestellte, abgeschreckte Versuchsprodukt zeigt gegenüber dem in üblicher Weise hergestellten, nicht abgeschreckten einen wesentlich geringeren Helligkeitsabfall, d.h. bessere Fotostabilität.

**Patentansprüche**

1. Verfahren zur Herstellung von Titandioxid-Pigmenten durch Kalzinieren des gegebenenfalls dotierten Ausfällungsproduktes, Glühen in sauerstoffhaltiger Atmosphäre, Abkühlen und Vermahlen, dadurch gekennzeichnet, dass zur Ausbildung eines photostabilen und/oder wetterbeständigen Titandioxid-Rutil-Pigments kalziniertes Titandioxid einer Temperierung in sauerstoffhaltiger Atmosphäre, vorzugsweise Luft, im Bereich von 250 bis 1000°C unterzogen und das Temperierte Gut abgeschreckt wird.

2. Verfahren nach Anspruch 1, dadurch gekennzeichnet, dass die Temperierung in Luft mit erhöhtem Sauerstoffanteil vorgenommen wird.

3. Verfahren nach den Ansprüchen 1 und 2, dadurch gekennzeichnet, dass zur Ausbildung eines photostabilen $TiO_2$-Rutil-Pigments das bei 750 bis 950°C temperierte Gut abgeschreckt wird.

4. Verfahren nach den Ansprüchen 1 und 2, dadurch gekennzeichnet, dass zur Ausbildung eines photostabilen $TiO_2$-Rutil-Pigments das bei 250 bis 500°C temperierte Gut abgeschreckt wird.

5. Verfahren nach den Ansprüchen 1 und 2, dadurch gekennzeichnet, dass zur Ausbildung eines wetterbeständigen $TiO_2$-Rutil-Pigments das bei einer Temperatur von mehr als 500°C bis weniger als 750°C temperierte Gut abgeschreckt wird.

6. Verfahren nach den Ansprüchen 1 bis 5, dadurch gekennzeichnet, dass das temperierte Gut mit Wasser abgeschreckt wird.

7. Verfahren nach den Ansprüchen 1 bis 5, dadurch gekennzeichnet, dass das temperierte Gut mit Luft abgeschreckt wird.

8. Verfahren nach den Ansprüchen 1 bis 7, dadurch gekennzeichnet, dass das temperierte Gut mit einer wasserhaltigen Luftströmung abgeschreckt wird.

**Claims**

1. A process of producing titanium dioxide pigments by calcining the precipitation, which may be doped, annealing in an oxygen-containing atmosphere, cooling and grinding, characterized in that a photostable and/or weather-resisting titanium dioxide-rutile pigment is produced in that calcined titanium dioxide is subjected to tempering in the range of 250 to 1000°C in an oxygen-containing atmosphere, preferably air, and the tempered material is quenched.

2. A process according to claim 1, characterized in that the tempering is effected in oxygen-enriched air.

3. A process according to claims 1 and 2, characterized in that a photostable $TiO_2$-rutile pigment is produced in that the material which has been tempered at 750 to 950°C is quenched.

4. A process according to claims 1 and 2, characterized in that a photostable $TiO_2$-rutile pigment is produced in that the material which has been tempered at 250 to 500°C is quenched.

5. A process according to claims 1 and 2, characterized in that a weather-resistant $TiO_2$-rutile pig-

ment is produced in that the material tempered at a temperature from above 500 to 750°C is quenched.

6. A process according to claims 1 to 5, characterized in that the tempered material is quenched with water.

7. A process according to claims 1 to 5, characterized in that the tempered material is quenched with air.

8. A process according to claims 1 to 7, characterized in that the tempered material is quenched with a water-containing air stream.

## Revendications

1. Procédé de fabrication de pigments de dioxyde de titane par calcination du prodit de précipitation éventuellement dopé, en portant à incandescence sous atmosphère d'oxygène, par refroidissement et broyage, caractérisé en ce que, pour obtenir un pigment de dioxyde de titane-rutile photostable et/ou résistant aux intempéries, on soumet du dioxyde de titane calciné à un traitement thermique sous atmosphère contenant de l'oxygène, de préférence de l'air, dans l'intervalle de 250 à 1000°C et en ce qu'on refroidit rapidement le produit soumis au traitement thermique.

2. Procédé suivant la revendication 1, caractérisé en ce qu'on effectue le traitement thermique à l'air enrichi en oxygène.

3. Procédé suivant les revendications 1 et 2, caractérisé en ce que, pour obtenir un pigment de $TiO_2$-rutile photostable, on refroidit rapidement le produit soumis à un traitement thermique à 750-950°C.

4. Procédé suivant les revendications 1 et 2, caractérisé en ce que, pour obtenir un pigment de $TiO_2$-rutile photostable, on refroidut rapidement le produit soumis à un traitement thermique à 250-500°C.

5. Procédé suivant les revendications 1 et 2, caractérisé en ce que, pour obtenir un pigment de $TiO_2$-rutile résistant aux intemperies, on refroidit rapidement le produit soumis à un traitement thermique à une température comprise entre une température supérieure à 500°C et une température inférieure à 750°C.

6. Procédé suivant les revendications 1 et 5, caractérisé en ce que le produit soumis à un traitement thermique est refroidi rapidement avec de l'eau.

7. Procédé suivant les revendications 1 et 5, caractérisé en ce que le produit soumis à un traitement thermique est refoidi rapidement avec de l'air.

8. Procédé suivant les revendications 1 et 7, caractérisé en ce que le produit soumis à un traitement thermique est refoidi rapidement au moyen d'un courant d'air contenant de l'eau.